# EUROPÄISCHE PATENTSCHRIFT

(11) **EP 0 438 648 B1**
(45) Veröffentlichungstag und Bekanntmachung des Hinweises auf die Patenterteilung: **26.01.1994**
(21) Anmeldenummer: 90121541.8
(22) Anmeldetag: 10.11.1990
(51) Int. Cl.: E04B 9/18, F16B 21/02

(54) **Abhängevorrichtung für eine Tragschiene einer Unterdecke**
Hanging device for a supporting rail of a false ceiling
Suspente pour un profilé de support d'un faux plafond

(30) Priorität: 22.01.1990 DE 4001697
(43) Veröffentlichungstag der Anmeldung: 31.07.1991
(73) Patentinhaber: Richter-System GmbH & Co. KG, 64347 Griesheim (DE)
(72) Erfinder: Maciejewski, Hans, W-6123 Bad König (DE); Knell, Willi, W-6087 Büttelborn-Worfelden (DE)
(74) Vertreter: Katscher, Helmut, Dipl.-Ing.

(56) Entgegenhaltungen:
- AU-B- 466 077
- CH-A- 434 651
- FR-A- 2 206 425
- NL-A- 7 003 811
- US-A- 4 827 687

## Beschreibung

Die Erfindung betrifft eine Abhängevorrichtung für eine im Querschnitt trogförmige, nach unten geöffnete Tragschiene einer Unterdecke, mit einem senkrechten Abhängerteil, das an seinem unteren Ende ein flaches, hammerkopfförmiges Ankerstück aufweist, das durch einen Einführschlitz in eine Ankerbohrung in der Stegfläche der Tragschiene einführbar ist und sich im montierten Zustand im Inneren der Tragschiene befindet und dessen Breite kleiner als die lichte Weite der Tragschiene ist.

Derartige Abhängevorrichtungen dienen dazu, die Tragschienen von abgehängten Unterdecken an einer Massivdecke anzubringen. Zur Erleichterung der Montage müssen die Abhängevorrichtungen rasch und einfach montierbar sein. Diese Verbindung soll gegen ein unbeabsichtigtes Lösen gesichert sein, auch wenn die Unterdecke beispielsweise durch einen Druckstoß oder einen Ballwurf angehoben wird.

Bei einer bekannten Abhängevorrichtung (DE-U 81 08 676) werden die Enden des hammerkopfförmigen Ankerstücks in Ausnehmungen in den beiden Seitenwänden der Tragschiene eingerastet. Eine Feder drückt das Abhängerteil nach oben, um ein unbeabsichtigtes Aushängen des Ankerstücks zu erschweren. Dieses Aushängen kann jedoch nicht sicher verhindert werden, wenn die Tragschiene angehoben und die Feder zusammengedrückt wird.

Bei einer anderen bekannten Abhängevorrichtung (DE-C 33 04 987) werden die Enden des Ankerstücks durch ein Verdrehen des Abhängerteils nach dem Einführen in die Tragschiene in horizontaler Richtung umgebogen, so daß das Ankerstück, dessen Breite größer als die lichte Weite der Tragschiene ist, im Grundriß S-förmig verformt wird. Das so verformte Ankerstück kann nicht mehr durch den Einführschlitz zurückgezogen werden, so daß eine formschlüssige Verbindung zwischen dem Abhängerteil und der Tragschiene gebildet wird. Diese formschlüssige Verbindung zwischen dem Abhängerteil und der Tragschiene kann nur durch eine Zerstörung des Ankerstücks gelöst werden. Bei der in der Praxis verwendeten Ausführungsform dieser Abhängevorrichtung schließt sich an beiden Enden des Einführschlitzes jeweils eine Ankerbohrung an.

Bei der Montage einer Unterdecke ist es aber oftmals erforderlich, nach dem Ausrichten der Tragschiene die vorläufig angebrachte Abhängevorrichtung wieder zu lösen und erneut mit der Tragschiene zu verbinden. Dies ist bei der bekannten Abhängevorrichtung nur dadurch möglich, daß das zunächst an der Tragschiene angebrachte Abhängerteil zerstört und durch ein neues Abhängerteil ersetzt wird. Dieses Zerstören des Abhängerteils durch Abbrechen des Ankerstücks ist verhältnismäßig umständlich; außerdem tritt ein erheblicher Verlust durch die Zerstörung der Abhängerteile ein.

Bei einer bekannten Abhängevorrichtung der eingangs genannten Gattung (US-A-4 827 687) hat das hammerkopfförmige Ankerstück an seinen beiden Enden nach oben ragende Nasen, die in Bohrungen der Stegfläche einrasten. Dadurch wird aber das unbeabsichtigte Aushängen nicht sicher verhindert, weil das Abhängerteil nach dem Anheben der Tragschiene gedreht und gelöst werden kann.

Aufgabe der Erfindung ist es daher, eine Abhängevorrichtung der eingangs genannten Gattung so auszubilden, daß einerseits eine formschlüssige, im montierten Zustand nicht unbeabsichtigt zu lösende Verbindung zwischen dem Abhängerteil und der Tragschiene geschaffen wird, andererseits aber ein nachträgliches Lösen dieser Verbindung ohne Zerstörung oder Beschädigung des Abhängerteils ermöglicht wird.

Diese Aufgabe wird erfindungsgemäß dadurch gelöst, daß die beiden Ränder des Einführschlitzes durch einen einzigen Längsschnitt in der Stegfläche der Tragschiene gebildet und senkrecht zur Stegfläche so weit auseinandergebogen sind, daß zwischen ihnen ein Spalt gebildet wird, dessen Spaltbreite erwas größer ist als die Dicke des Ankerstücks.

Da der Einführschlitz seine zum Einführen des Ankerstücks notwendige Spaltbreite erst dadurch erhält, daß die beiden Ränder des einzigen Längsschnitts in senkrechter Richtung auseinandergebogen werden, kann das Ankerstück des Abhängerteils nur in stark geneigter Stellung eingeführt werden. Innerhalb des Einführschlitzes kann das Abhängerteil nicht senkrecht gestellt werden, weil die Ränder des Einführschlitzes im Grundriß gesehen nur einen geringen horizontalen Abstand zueinander haben, der wesentlich geringer als die Dicke des Ankerstücks ist. Das Abhängerteil kann aber entlang dem Einführschlitz in die sich anschließende Ankerbohrung verschoben und dort in eine senkrechte Stellung gebracht und so verdreht werden, daß es sich quer zur Längsrichtung der Tragschiene erstreckt.

In dieser Stellung kann das Abhängerteil an der Massivdecke angebracht werden, beispielsweise durch Verbindung mit einem an der Massivdecke angebrachten, oberen Abhängerteil. In dieser senkrechten Stellung kann das untere Abhängerteil jedoch nicht mehr in den Einführschlitz bewegt werden, so daß das Ankerstück - unabhängig von seiner jeweiligen Drehstellung - formschlüssig im Inneren der Tragschiene unter der Ankerbohrung aufgenommen ist.

Wenn jedoch ein nachträgliches Lösen des Abhängerteils von der Tragschiene gewünscht wird, beispielsweise nach dem Ausrichten der Tragschiene beim Montagevorgang, dann kann das Abhängerteil nach dem Lösen von der Massivdecke in eine solche Schräglage gebracht werden, daß es wieder in den Einführschlitz geschoben und seitlich aus dem Einführschlitz herausgezogen werden kann, ohne daß hierfür eine Verformung oder Zerstörung des Ankerstücks notwendig wäre. Das Abhängerteil mit dem unbeschädigten Ankerstück kann beliebig oft erneut in der beschriebenen Weise an der Ankerschiene angebracht und nach Bedarf auch wieder gelöst werden.

Gemäß einer bevorzugten Ausführungsform der Erfindung ist vorgesehen, daß an einem Ende des Einführschlitzes ein Einsteckloch angeordnet ist, dessen lichte Weite größer als die Breite des Ankerstücks ist. Damit wird die Montage wesentlich erleichtert, insbesondere wenn die Montage über Kopf erfolgen muß. Das Ankerstück kann dann von oben in das Einsteckloch eingeführt werden. Zweckmäßigerweise ist das Einsteckloch kreisförmig, so daß das Ankerstück in jeder beliebigen Stellung eingeführt werden kann. Von dort aus wird das Ankerstück dann durch den Einführschlitz hindurch in die am anderen Ende angeordnete Ankerbohrung verschoben und dort aufgerichtet. In dieser aufgerichteten Stellung kann das Abhängerteil nicht mehr durch den Einführschlitz zurück verschoben werden.

Besonders vorteilhaft ist es, wenn beiderseits des Einstecklochs jeweils ein Einführschlitz angeordnet ist und daß sich an jeden der beiden Einführschlitze jeweils eine Ankerbohrung anschließt. Dadurch ist die Möglichkeit gegeben, das Abhängerteil von dem Einsteckloch aus wahlweise nach einer von beiden Richtungen zu verschieben, wenn dies aus Montagegründen gewünscht wird.

Zweckmäßigerweise sind die beiden an das Einsteckloch anschließenden Spalte mit entgegengesetzter Neigungsrichtung ausgeführt, so daß bei beengten Montageverhältnissen wahlweise die eine oder andere Neigungsrichtung des Abhängerteils beim Verschieben durch den Einführschlitz gewählt werden kann.

Vorteilhafte Ausgestaltungen des Erfindungsgedankens sind Gegenstand von Unteransprüchen.

Nachfolgend werden Ausführungsbeispiele der Erfindung näher erläutert, die in der Zeichnung dargestellt sind. Es zeigt:
Fig. 1 in räumlicher Darstellungsweise eine Abhängevorrichtung mit einer Tragschiene einer Unterdecke,
Fig. 2 einen Schnitt längs der Linie II-II in Fig. 1 durch die Tragschiene,
Fig. 3 eine Ansicht des Ankerstücks am Abhängerteil,
Fig. 4 eine Draufsicht in Richtung des Pfeiles IV in Fig. 2, wobei das Abhängerteil geschnitten dargestellt ist,
Fig. 5 in einem Schnitt ähnlich der Fig. 2 das Einführen des Ankerstücks des Abhängerteils in die Tragschiene,
Fig. 6 eine Draufsicht ähnlich der Fig. 4 auf eine abgewandelte Ausführungsform,
Fig. 7 einen Schnitt längs der Linie VII-VII in Fig. 6 und
Fig. 8 einen Schnitt längs der Linie VIII-VIII in Fig. 6.

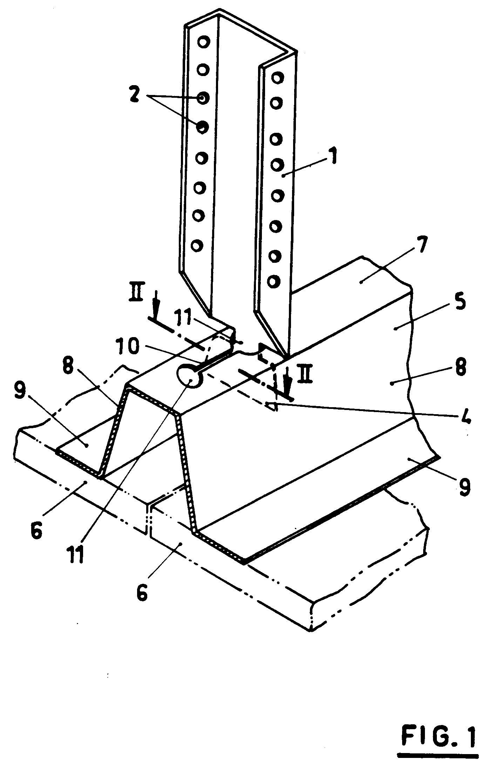

Die in Fig. 1 gezeigte Abhängevorrichtung weist ein senkrechtes Abhängerteil 1 auf, das zur Verbindung mit einem oberen (nicht dargestellten) Abhängerteil bestimmt ist, das an einer (ebenfalls nicht dargestellten) Massivdecke befestigt ist. Zur Höhenverstellung sind an dem im Querschnitt U-förmigen Abhängerteil 1 Noniusbohrungen 2 vorgesehen, die mittels eines Stiftes mit den zugeordneten Bohrungen am oberen Abhängerteil verbunden werden.

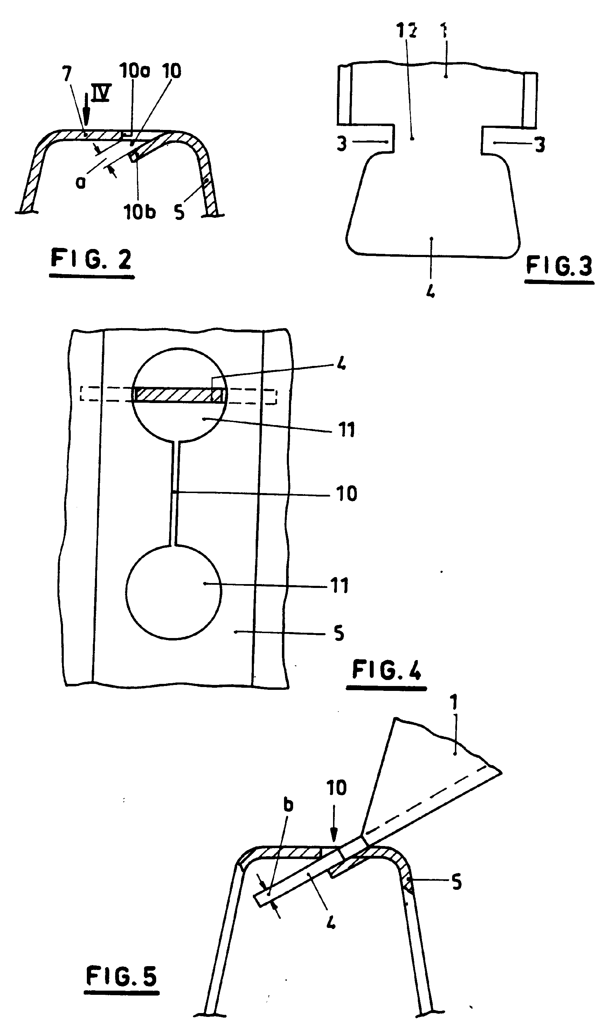

Am unteren Ende des Abhängerteils 1 (Fig. 3) ist durch seitliche Einschnitte 3 ein flaches, im wesentlichen hammerkopfförmiges Ankerstück 4 abgeteilt.

Eine im senkrechten Querschnitt im wesentlichen trogförmige, nach unten geöffnete Tragschiene 5 trägt Paneele oder Platten 6 einer Unterdecke, die in Fig. 1 mit strichpunktierten Linien nur angedeutet sind. Die Tragschiene 5 hat eine obenliegende Stegfläche 7, an die sich beiderseits nach unten divergierende Seitenwände 8 anschließen. Die unteren Ränder der Seitenwände 8 weisen nach außen abgewinkelte Flanschstreifen 9 auf, an denen die Platten 6 befestigt sind. Einzelheiten dieser Befestigung bzw. weitere Bauteile der Unterdecke sind der einfacheren Darstellung halber in Fig. 1 weggelassen.

In der Stegfläche 7 der Tragschiene 5 sind in regelmäßigen Abständen längsverlaufende Einführschlitze 10 vorgesehen (Fig. 2 und 4), an die sich beiderseits in Längsrichtung jeweils eine Ankerbohrung 11 anschließt. Der Durchmesser jeder der beiden Ankerbohrungen 11 ist etwas größer als die Breite eines Halsstücks 12, das zwischen den Einschnitten 3 liegt und das Ankerstück 4 mit dem übrigen Teil des Abhängerteils 1 verbindet.

Wie man besonders deutlich aus Fig. 2 erkennt, sind die beiden Ränder 10a und 10b des Einführschlitzes 10 durch einen einzigen Längsschnitt in der Stegfläche 7 gebildet. Der den einen Rand 10b des Einführschlitzes aufweisender Randstreifen ist in der in Fig. 2 dargestellten Weise nach unten gebogen. Der auf diese Weise zwischen den beiden Rändern 10a und 10b gebildete Spalt hat eine Spaltbreite a, die etwas größer ist als die Dicke b (Fig. 5) des Ankerstücks 4. Deshalb ist es möglich, das Ankerstück 4 in der in Fig. 5 dargestellten Weise in schräger Stellung in den Einführschlitz 10 einzuführen. Das Abhängerteil 1 ist hierbei noch nicht mit der Massivdecke verbunden.

Nach dem Einführen des Ankerstücks 4 in der in Fig. 5 gezeigten Weise wird das Ankerstück 4 entlang dem Einführschlitz 10 zu einer der beiden Ankerbohrungen 11 hin verschoben und dort in seine senkrechte Stellung aufgerichtet. Da die Breite des Ankerstücks 4 kleiner als die lichte Weite der Tragschiene 5 ist, wie man aus einem Vergleich der Fig. 2 und 3 erkennt, und da die Kontur des Ankerstücks 4 an die Innenkontur im oberen Bereich der Tragschiene 5 angepaßt ist, kann das Ankerstück 4 in der Ankerbohrung 11 beliebig gedreht werden. Vorzugsweise wird das Ankerstück 4 in die in Fig. 4 gezeigte Stellung gebracht, wobei es sich quer zur Längsrichtung der Tragschiene 5 erstreckt.

Wenn das Abhängerteil 1 an der Massivdecke angebracht ist, behält es seine senkrechte Stellung zwangsläufig bei, so daß es nicht mehr in die in Fig. 5 gezeigte Schräglage gelangen kann. Deshalb ist ein unbeabsichtigtes Lösen des Abhängerteils 1 von der Tragschiene 5 ausgeschlossen. Erst nach einem Lösen des Abhängerteils 1 von der Massivdecke kann es ohne Beschädigung oder Verformung des Ankerstücks 4 in die in Fig. 5 gezeigte Stellung gebracht und aus dem Einführschlitz 10 herausgezogen werden.

Abweichend von dem in der Zeichnung dargestellten Ausführungsbeispiel könnte auch der Rand 10a gegenüber dem Rand 10b nach oben gebogen werden, um die gewünschte Spaltbreite a zu erreichen. Die dargestellte Ausführung, bei der der eine Rand 10b gegenüber der Stegfläche 7 nach unten gebogen ist, ist jedoch vorteilhaft, wenn (nicht dargestellte) Teile, die außen an der Stegfläche 7 anliegen, entlang der Tragschiene 5 verschoben werden sollen.

Bei dem dargestellten Ausführungsbeispiel hat die Tragschiene 5 im Querschnitt Trapezform; an diese ist auch die Kontur des Ankerstücks 4 angepaßt. Eine formschlüssige Verbindung in der beschriebenen Weise ist jedoch auch gegeben, wenn die Tragschiene 5 eine andere Querschnittsform hat und/oder keine Anpassung der Kontur des Ankerstücks 4 an die Innenkontur der Tragschiene 5 vorgenommen wird.

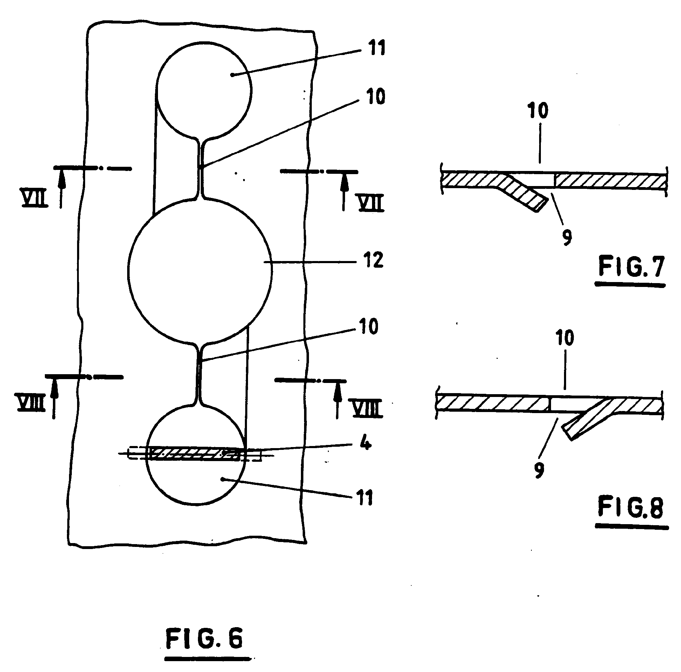

Das in den Fig. 6 bis 8 dargestellte Ausführungsbeispiel unterscheidet sich von dem Ausführungsbeispiel nach den Fig. 1 bis 5 im wesentlichen nur dadurch, daß zwischen zwei Einführschlitzen 10 ein kreisförmiges Einsteckloch 12 angeordnet ist. Jeder der beiden Einsteckschlitze 10 weist somit an seinem einen Ende die schon beschriebene Ankerbohrung 11 auf und geht an seinem anderen Ende in das Einsteckloch 12 über.

Aus den in den Fig. 7 und 8 gezeigten Querschnitten der beiden Einführschlitze 10 erkennt man, daß deren Spalte a mit entgegengesetzter Neigungsrichtung ausgeführt sind.

Die lichte Weite, d.h. beim dargestellten Ausführungsbeispiel der Durchmesser, des Einstecklochs 12 ist größer als die Breite des einzusteckenden Ankerstücks 4. Bei der Montage kann das Ankerstück 4 somit in jeder beliebigen Drehstellung von oben in das Einsteckloch 12 eingesteckt werden. Dadurch wird die Montage über Kopf wesentlich erleichtert, bei der der Arbeiter das Einsteckloch 12 und das Ankerstück 4 nicht sehen, sondern nur fühlen kann.

Aus dem Einsteckloch 12 wird das Ankerstück 4 anschließend wahlweise durch den einen oder den anderen Einführschlitz 10 hindurch in die eine oder die andere Ankerbohrung 11 verschoben. Die Schrägstellung, die das Ankerstück 4 dabei einnehmen muß, ist bei den beiden Einführschlitzen 10 entgegengesetzt.

Wie schon beschrieben, kann das Ankerstück 4 in seiner senkrechten Stellung nicht mehr aus der Ankerbohrung 11 herausbewegt werden, und zwar unabhängig von seiner jeweiligen Drehstellung um seine senkrechte Achse.

## Patentansprüche

1. Abhängevorrichtung für eine im Querschnitt trogförmige, nach unten geöffnete Tragschiene (5) einer Unterdecke, mit einem senkrechten Abhängerteil (1), das an seinem unteren Ende ein flaches, hammerkopfförmiges Ankerstück (4) aufweist, das durch einen Einführschlitz (10) in eine Ankerbohrung (11) in der Stegfläche (7) der Tragschiene (5) einführbar ist und sich im montierten Zustand im Inneren der Tragschiene (5) befindet und dessen Breite kleiner als die lichte Weite der Tragschiene (5) ist, dadurch gekennzeichnet, daß die beiden Ränder (10a, 10b) des Einführschlitzes (10) durch einen einzigen Längsschnitt in der Stegfläche (7) der Tragschiene (5) gebildet und senkrecht zur Stegfläche (7) so weit auseinandergebogen sind, daß zwischen ihnen ein Spalt gebildet wird, dessen Spaltbreite (a) etwas größer ist als die Dicke (b) des Ankerstücks (4).

2. Abhängevorrichtung nach Anspruch 1, dadurch gekennzeichnet, daß der eine Rand (10b) des Einführschlitzes (10) aus der Stegfläche (7) nach unten gebogen ist.

3. Abhängevorrichtung nach Anspruch 1, dadurch gekennzeichnet, daß die Kontur des Ankerstücks (4) an die Innenkontur im oberen Bereich der Tragschiene (5) angepaßt ist.

4. Abhängevorrichtung nach Anspruch 1, dadurch gekennzeichnet, daß an einem Ende des Einführschlitzes (10) ein Einsteckloch (12) angeordnet ist, dessen lichte Weite größer als die Breite des Ankerstücks (4) ist.

5. Abhängevorrichtung nach Anspruch 4, dadurch gekennzeichnet, daß beiderseits des Einstecklochs (12) jeweils ein Einführschlitz (10) angeordnet ist und daß sich an jeden der beiden Einführschlitze (10) jeweils eine Ankerbohrung (11) anschließt.

6. Abhängevorrichtung nach Anspruch 5, dadurch gekennzeichnet, daß die beiden an das Einsteckloch (12) anschließenden Spalte (a) mit entgegengesetzter Neigungsrichtung ausgeführt sind.

7. Abhängevorrichtung nach Anspruch 4, dadurch gekennzeichnet, daß das Einsteckloch (12) kreisförmig ist.

## Claims

1. Hanging device for a trough-shaped in cross-section supporting rail (5), open in a downward direction, of a false ceiling, having a vertical hanger section (1) which has at its lower end a flat, hammerhead-shaped anchor piece (4) which can be introduced through an entry slot (10) into an anchor hole (11) in the web surface (7) of the supporting rail (5) and which is located in the interior of the supporting rail (5) in its assembled state, and the width of which is smaller than the clear width of the supporting rail (5), characterised in that the two edges (10a, 10b) of the entry slot (10) are formed by a single lengthwise cut in the web surface (7) of the supporting rail (5) and are bent apart perpendicularly to the web surface (7) so far that a gap is formed between them, the gap width (a) of which is somewhat greater than the thickness (b) of the anchor piece (4).

2. Hanging device according to Claim 1, characterised in that one edge (10b) of the entry slot (10) is bent downwards from the web surface (7).

3. Hanging device according to Claim 1, characterised in that the contour of the anchor piece (4) has been adapted to the internal contour in the upper area of the supporting rail (5).

4. Hanging device according to Claim 1, characterised in that at one end of the entry slot (10) an insert hole (12) is located, the clear width of which is greater than the width of the anchor piece (4).

5. Hanging device according to Claim 4, characterised in that an entry slot (10) is located on each of the two sides of the insert hole (12) and that an anchor hole (11) is connected to each of the two entry slots (10).

6. Hanging device according to Claim 5, characterised in that the two gaps (a) connecting to the insert hole (12) are of a type with opposed directions of incline.

7. Hanging device according to Claim 4, characterised in that the insert hole (12) is circular in shape.

## Revendications

1. Dispositif de suspension d'un profilé de support (5) d'un faux plafond en forme d'auge en section transversale et ouvert vers le bas, ce dispositif comportant une partie de suspension (1) verticale qui présente à son extrémité inférieure une pièce d'ancrage (4) plate en forme de tête de marteau, qui peut être insérée à travers une encoche d'insertion (10) dans une ouverture d'ancrage (11) de l'âme (7) du profilé de support (5) et se trouve, lorsqu'elle est montée, à l'intérieur du profilé de support (5), sa largeur étant plus petite que la largeur du profilé de support (5), caractérisé en ce que les deux bords (10a, 10b) de l'encoche d'insertion (10) sont formés par une section longitudinale unique dans la surface de l'âme (7) du profilé de support (5) et doivent être rabattus dans des directions opposées perpendiculairement à la surface de l'âme (7) en sorte que se forme entre eux un espacement dont la largeur (a) est un peu plus grande que l'épaisseur (b) de la pièce d'ancrage (4).

2. Dispositif de suspension selon la revendication 1, caractérisé en ce que le premier bord (10b) de l'encoche d'insertion (10) est replié vers le bas à partir de la surface (7) de l'âme.

3. Dispositif de suspension selon la revendication 1, caractérisé en ce que le contour de la pièce d'ancrage (4) est adapté au contour interne de la région supérieure du profilé de support (5).

4. Dispositif de suspension selon la revendication 1, caractérisé en ce que l'on agence sur une extrémité de l'encoche d'insertion (10) un orifice d'enfichage (12) dont la largeur est plus grande que la largeur de la pièce d'ancrage (4).

5. Dispositif de suspension selon la revendication 4, caractérisé en ce que sur les deux côtés de l'orifice d'enfichage (12) est agencée respectivement une encoche d'insertion (10) et un orifice d'ancrage (11) se raccorde respectivement à chacune des deux encoches d'insertion (10).

6. Dispositif de suspension selon la revendication 5, caractérisé en ce que les deux espacements (a) qui se raccordent à l'orifice d'enfichage (12) sont réalisés avec une direction d'inclinaison opposée.

7. Dispositif de suspension selon la revendication 4, caractérisé en ce que l'orifice d'enfichage (12) a une forme circulaire.
